# EUROPÄISCHE PATENTANMELDUNG

(11) **EP 2 392 748 A2**
(43) Veröffentlichungstag der Anmeldung: **07.12.2011**
(21) Anmeldenummer: 11164407.6
(22) Anmeldetag: 02.05.2011
(51) Int. Cl.: E04F 13/08, F24J 2/52

(54) **Wandkonstruktion**

(30) Priorität: 07.06.2010 DE 202010005576 U
(71) Anmelder: SCHÜCO International KG, 33609 Bielefeld (DE)
(72) Erfinder: Imkamp, Gerd, 33334 Gütersloh (DE); Stockhausen, Andre, 32052 Herford (DE); Hanke, Carsten, 33729 Bielefeld (DE)
(74) Vertreter: Dantz, Jan Henning

(57) **Zusammenfassung**

Wandkonstruktion, insbesondere für Industriehallen, mit einem bodenseitig abgestützten vertikalen Trägerpfosten (5), an dem ein Trägerprofil (1) mit einem oberen Ende festgelegt ist, wobei an dem Trägerprofil (1) mindestens ein Träger (2) mit einem Solarmodul (3) fixiert ist, und das Trägerprofil (1) über einen zwischen Trägerpfosten (5) und Trägerprofil (1) angeordneten Abstandshalter (9) in einer zur Vertikalen geneigten Ausrichtung fixiert ist.

## Beschreibung

Die vorliegende Erfindung betrifft eine Wandkonstruktion, insbesondere für Industriehallen.

Es gibt Montagesysteme für Solarmodule, bei denen ein Gestell schräg ausgerichtet wird und auf einer Seite an einer Wand oder Fassade und an der gegenüberliegenden Seite auf einer Unterkonstruktion, beispielsweise auf Rammpfosten, abgestützt ist. Dabei ist nachteilig, dass die Aufnahme der statischen Lasten über die Unterkonstruktion erfolgt, weshalb diese mit erheblichem Aufwand durch die Rammpfosten oder Gießen von Sockeln oder andere Maßnahmen erfolgen muss. Zudem besteht nicht immer die Möglichkeit, das Montagesystem für Solarmodule bodenseitig abzustützen.

Es ist daher Aufgabe der vorliegenden Erfindung, eine Wandkanstruktion zu schaffen, die auf einfache Weise eine Montage von Solarmodulen ermöglicht, ohne dass bodenseitige Verankerungsmaßnahmen durchgeführt werden müssen.

Diese Aufgabe wird mit einer Wandkonstruktion mit den Merkmalen des Anspruches 1 gelöst.

Erfindungsgemäß umfasst die Wandkonstruktion einen bodenseitig abgestützten vertikalen Trägerpfosten, der beispielsweise auch Trägerpfosten für ein Wandelement einer Industriehalle sein kann, an dem ein Trägerprofil mit einem oberen Ende festgelegt ist. An dem Trägerprofil ist mindestens ein Träger mit einem Solarmodul fixiert und das Trägerprofil ist über einen zwischen Trägerpfosten und Trägerprofil angeordneten Abstandshalter in einer zur Vertikalen geneigten Ausrichtung fixiert. Dadurch erfolgt die Aufnahme der Gewichtslasten über die Anbindung des Trägerprofils an den vertikalen Trägerpfosten und es müssen keine Maßnahmen zur bodenseitigen Abstützung des Trägerprofils vorgenommen werden. Das Trägerprofil ist lediglich durch einen Abstandshalter in einem vorbestimmten Neigungswinkel fixiert, um die Solarmodule mit hohem Wirkungsgrad betreiben zu können.

Vorzugsweise ist das Trägerprofil in Längsrichtung bewegbar an dem Abstandshalter fixiert. Dadurch können insbesondere Wärmespannungen vermieden werden, da das Trägerprofil in größeren Längen, beispielsweise von mehr als 4 m, montiert wird. Das Trägerprofil kann hierfür gelenkig oder verschiebbar an dem Abstandshalter fixiert sein, so dass Längenänderungen des Trägerprofils problemlos kompensiert werden können.

Für eine optimierte Ausrichtung der Solarmodule kann das Trägerprofil in einem Neigungswinkel zwischen 5° und 20°, insbesondere 8° bis 15°, zur Vertikalen ausgerichtet sein. Die Solarmodule sind vorzugsweise plattenförmige Photovoltaikelemente, wobei auch andere Solarmodule an den Trägerprofilen montiert werden können.

Vorzugsweise ist an dem Trägerpfosten ein Wandelement montiert, beispielsweise ein Wandelement mit einer Außenschicht und einer Isolierschicht. Das Trägerprofil zur Fixierung der Solarmodule erstreckt sich dabei in einer bevorzugten Ausgestaltung über mindestens 70%, vorzugsweise mindestens 80%, der Höhe des Wandelementes, so dass die Fläche des Wandelementes weitgehend genutzt wird und die Wandkonstruktion auch an stehenden Industriehallen gut nachgerüstet werden kann.

Um eine große Fläche eines Wandelementes mit Solarmodulen zu bedecken, sind mehrere Trägerprofile nebeneinander jeweils an einem vertikalen Trägerpfosten festgelegt, wobei die Trägerprofile über Querträger miteinander verbunden sind, an denen Solarmodule mit einer Fläche von mehr als 20 m² montiert sind. Dadurch können auch besonders großflächige Solarmodule, die beispielsweise eine Größe von mehr als 4 m², insbesondere mehr als 5 m², besitzen, auf einfache Weise an dem Trägerprofil montiert werden. Das untere Ende des Trägerprofils kann dabei weniger als 1 m über dem Boden angeordnet sein, so dass ein Wandelement weitgehend vollflächig mit Solarmodulen überdeckt werden kann.

Für eine stabile Befestigung sind vorzugsweise Befestigungsmittel für das Trägerprofil und/oder den Abstandshalter vorgesehen, die das Wandelement durchgreifen. Dabei kann in dem Wandelement eine Bohrung ausgebildet sein, durch die das Befestigungsmittel durchgeführt ist, wobei die Bohrung dann nach der Montage ausgeschäumt und abgedichtet ist. Dadurch können Wärmeverluste durch die Befestigungsmittel gering gehalten werden.

Die Erfindung wird nachfolgend anhand mehrerer Ausführungsbeispiele mit Bezug auf die beigefügten Zeichnungen näher erläutert. Es zeigen:

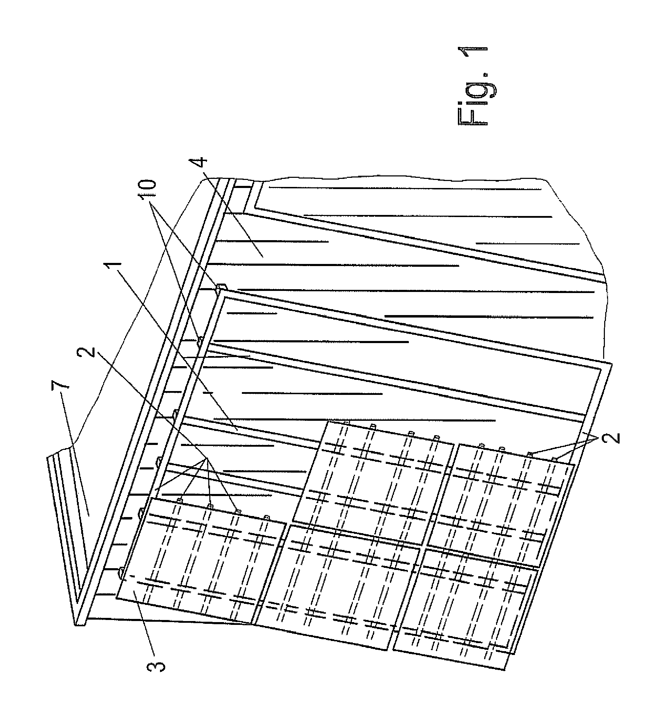

- Figur 1: eine perspektivische Ansicht einer erfindungsgemäßen Wandkonstruktion;
- Figur 2: eine Seitenansicht der Wandkonstruktion der Figur 1;
- Figur 3: eine Detailansicht der oberen Befestigung der Trägerprofile der Wandkonstruktion;
- Figur 4: eine Detailansicht der unteren Anbindung der Trägerprofile der Wandkonstruktion, und
- Figur 5: eine perspektivische Explosionsdarstellung einer modifizierten Befestigung der Trägerprofile.

Eine Wandkonstruktion umfasst geneigt angeordnete Trägerprofile 1, die über Befestigungsmittel 10 am oberen Ende festgelegt sind. Dabei sind mehrere Trägerprofile 1 angeordnet, die über einen oder mehrere Querträger 2 miteinander verbunden sind. Auf den Querträgern 2 sind Solarmodule, beispielsweise großflächige Photovoltaikmodule mit einer Fläche von mehr als 5 m², festgelegt. Die Trägerprofile 1 können je nach Höhe eines Wandelementes 4 ebenfalls eine Länge von 4 bis 10 m, insbesondere 6 bis 8 m, besitzen.

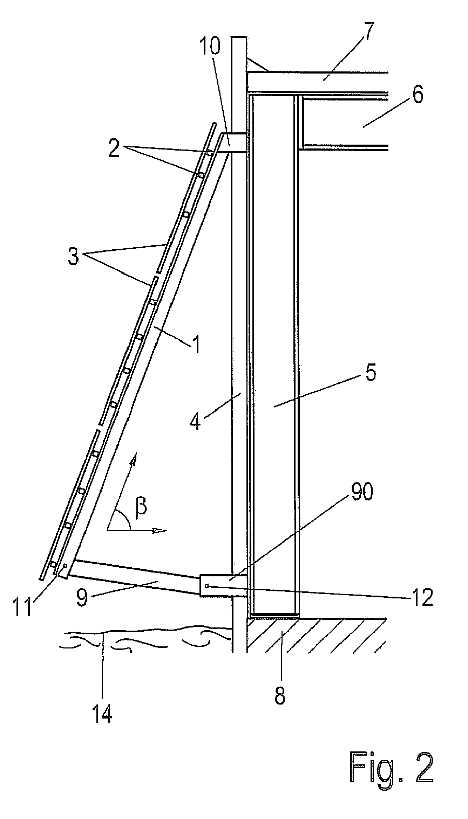

Wie in Figur 2 gezeigt ist, ist jedes Trägerprofil 1 auf einer zum Boden 14 gewandten Seite an einem Abstandshalter 9 in Form einer Strebe gehalten, wobei der Abstandshalter 9 über ein Gelenk 11 mit dem Trägerprofil 1 verbunden ist. Auf der gegenüberliegenden Seite ist der Abstandshalter 9 ebenfalls über ein Gelenk 12 mit einem Befestigungsmittel 90 verbunden. Dadurch ist das Trägerprofil 1 hängend an dem Befestigungsmittel 10 festgelegt und kann sich in der Länge ausdehnen und zusammenziehen, wie dies mit dem Pfeil symbolisiert ist. Die Längenänderung wird durch ein Verschwenken des Abstandshalters 9 kompensiert. Es ist natürlich auch möglich, den Abstandshalter 9 mit Führungsmitteln zu versehen, damit das Trägerprofil 1 entlang dem Abstandshalter 9 verschiebbar geführt ist.

Das Trägerprofil 1 ist durch den Abstandshalter 9 in einem Winkel β von etwa 70 bis 85° zur Horizontalen geneigt ausgerichtet, so dass die Solarmodule 3 einen hohen Wirkungsgrad aufweisen.

Die Wandkonstruktion umfasst ferner einen vertikalen Trägerpfosten 5, der an einem Boden 8 verankert ist und an dem ein Wandelement 4 montiert ist. Ferner dient der vertikale Trägerpfosten 5 als Halter für Dachstreben 6 und Dachelement 7.

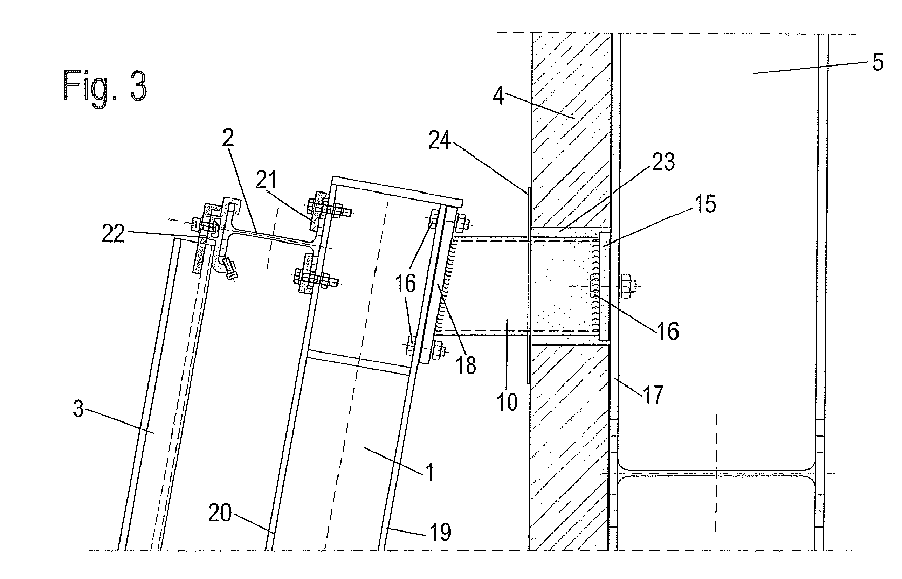

Die Befestigung des Trägerprofils 1 im oberen Bereich ist im Detail in Figur 3 dargestellt. Der vertikale Trägerpfosten 5 ist als Doppel-T-Profil ausgebildet und umfasst einen seitlichen Steg 17, an dem ein Wandelement 4 festgelegt ist. Das Wandelement 4 kann eine Isolierung an einer Außenhülle, beispielsweise aus einem Metallblech, aufweisen.

Um das Trägerprofil 1 an dem Trägerpfosten 5 zu montieren, ist ein Befestigungsmittel 10 vorgesehen, das auf einer Seite einen plattenförmigen Flansch 15 aufweist, der an dem Steg 17 anliegt und über eine oder mehrere Schrauben 16 fixiert ist. Das Befestigungsmittel 10 umfasst einen biegesteifen Steg, der sich von dem Flansch 15 zu einer gegenüberliegenden Trägerplatte 18 erstreckt, die zur Vertikalen geneigt ausgerichtet ist. Die Trägerplatte 18 liegt an einem Steg 19 des Trägerprofils 1 an, das ebenfalls als Doppei-T-Profil ausgebildet ist. Dabei ist die Trägerplatte 18 mit dem Steg 19 über eine oder mehrere Schrauben 16 fixiert. An der gegenüberliegenden Seite des Trägerprofils 1 ist ebenfalls ein Steg 20 ausgebildet, an dem ein Querträger 2 über Befestigungsmittel 21 festgelegt ist, wobei an dem Querträger 2 über Haltemittel 22 ein plattenförmiges Solarmodul 3 fixiert ist. Die Solarmodule 3 können eine Kantenlänge von über 2 m besitzen, beispielsweise 2,20 x 2,60 m.

Um das Befestigungsmittel 10 auch nachträglich an einem Trägerpfosten 5 montieren zu können, wird zunächst in das Wandelement 4 eine Bohrung eingebracht und das Befestigungsmittel 10 montiert. Anschließend wird der Hohfraum in dem Wandelement 4 durch Schaum 23 gefüllt und durch eine Abdeckplatten 24 nach außen verschlossen. Dadurch können Wärmeverluste gering gehalten werden und Feuchtigkeitsschäden vermieden werden.

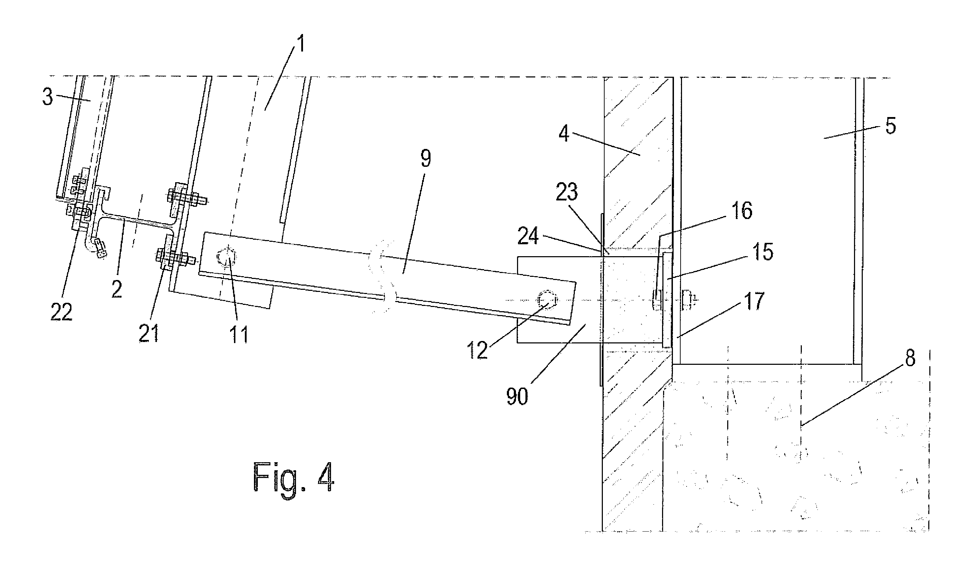

In Figur 4 ist die Anbindung des Trägerprofils 1 im unteren Bereich dargestellt. Auch hier ist das Trägerprofil 1 außen mit einem Querträger 2 verbunden, an dem ein Solarmodul 3 festgelegt ist. Auf der zum Wandelement 4 gerichteten Seite ist ein Abstandshalter 9 in Form einer Strebe vorgesehen, der über eine Achse 11 gelenkig mit dem Trägerprofil 1 verbunden ist. Auf der gegenüberliegenden Seite ist der Abstandshalter 9 über eine Achse 12 gelenkig mit einem Befestigungsmittel 90 verbunden, das über eine Montageplatte 15 an dem Steg 17 des Trägerpfostens 5 anliegt. Die Montageplatte 15 ist mit dem Steg 17 über Schrauben 16 verbunden. Ferner steht von der Montageplatte 15 ein Schwert 90 hervor und durchgreift das Wandelement 4, wobei an dem hervorstehenden Teil die Achse 12 zur Fixierung des Abstandshalters 9 angeordnet ist. Das Wandelement 4 ist auch hier durch eine Bohrung ausgespart, die nach Montage des Befestigungsmittels 90 mit Schaum 23 gefüllt ist und durch eine Abdeckplatte 24 verschlossen ist. Wie in Figur 4 erkennbar ist, befindet sich das Befestigungsmittel 90 kurz oberhalb eines Hallenbodens 8, an dem der Trägerpfosten 5 fixiert ist. Dadurch können die Trägerprofile 1 sich kurz oberhalb des Bodens erstrecken, beispielsweise mit einem Abstand von weniger als 1 m. Dadurch ist das Wandelement 4 in der Höhe weitgehend durch das Trägerprofil 1 überdeckt.

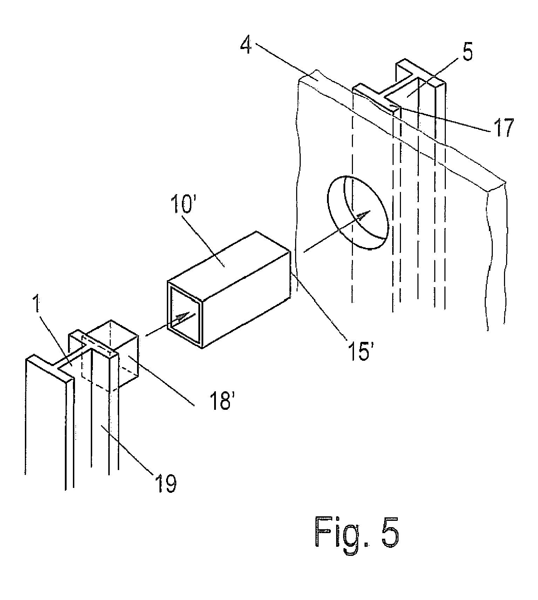

In Figur 5 ist eine alternative Ausführungsform zur Befestigung eines Trägerprofils 1 gezeigt. An dem Trägerpfosten 5 sind an dem Steg 17 Bohrungen zur Festlegung eines Sockels 10' vorgesehen, der als Hohlprofil ausgebildet ist und mit einer Bodenplatte 15' an dem Steg 17 festgelegt werden kann. In den Sockel 10' wird ein Steckelement 18' eingefügt, das an einem Steg 19 des Trägerprofils 1 angeschweißt ist. Dadurch kann das Trägerprofil 1 auf einfache Weise an dem Sockel 10' vorfixiert werden, bevor Befestigungsmittel an dem Sockel 10' und dem Steckelement 18' montiert werden.

## Patentansprüche

1. Wandkonstruktion, insbesondere für Industriehallen, mit einem bodenseitig abgestützten vertikalen Trägerpfosten (5), an dem ein Trägerprofil (1) mit einem oberen Ende festgelegt ist, wobei an dem Trägerprofil (1) mindestens ein Träger (2) mit einem Solarmodul (3) fixiert ist, und das Trägerprofil (1) über einen zwischen Trägerpfosten (5) und Trägerprofil (1) angeordneten Abstandshalter (9) in einer zur Vertikalen geneigten Ausrichtung fixiert ist.

2. Wandkonstruktion nach Anspruch 1, **dadurch gekennzeichnet, dass** das Trägerprofil (1) in Längsrichtung bewegbar an dem Abstandshalter (9) fixiert ist.

3. Wandkonstruktion nach Anspruch 2, **dadurch gekennzeichnet, dass** das Trägerprofil (1) verschiebbar an dem Abstandshalter (9) fixiert ist.

4. Wandkonstruktion nach einem der Ansprüche 1 bis 3, **dadurch gekennzeichnet, dass** das Trägerprofil (1) in einem Neigungswinkel zwischen 5° und 20°, insbesondere 8° bis 15°, zur Vertikalen ausgerichtet ist.

5. Wandkonstruktion nach einem der Ansprüche 1 bis 4, **dadurch gekennzeichnet, dass** an dem Trägerpfosten (5) ein Wandelement (4) montiert ist.

6. Wandkonstruktion nach Anspruch 5, **dadurch gekennzeichnet, dass** das Trägerprofil (2) zur Fixierung der Solarmodule (3) sich über mindestens 70%, vorzugsweise mindestens 80%, der Höhe des Wandelementes (4) erstreckt.

7. Wandkonstruktion nach einem der Ansprüche 1 bis 6, **dadurch gekennzeichnet, dass** mehrere Trägerprofile (1) nebeneinander jeweils an einem vertikalen Trägerpfosten (5) festgelegt sind und die Trägerprofile (1) über Querträger (2) miteinander verbunden sind, an denen Solarmodule (3) mit einer Fläche von mehr als 20 m² montiert sind.

8. Wandkonstruktion nach einem der vorhergehenden Ansprüche, **dadurch gekennzeichnet, dass** das Wandelement (4) eine Außenschicht und eine Isolierschicht umfasst.

9. Wandkonstruktion nach einem der vorhergehenden Ansprüche, **dadurch gekennzeichnet, dass** das Trägerprofil (1) und/oder der Abstandshalter (9) über Befestigungsmittel (10, 90) an dem vertikalen Trägerpfosten (5) festgelegt sind, die das Wandelement (4) durchgreifen.

10. Wandkonstruktion nach Anspruch 9, **dadurch gekennzeichnet, dass** in dem Wandelement (4) eine Bohrung ausgebildet ist, durch die das Befestigungsmittel (10, 90) durchgeführt ist, wobei die Bohrung ausgeschäumt und abgedichtet ist.

11. Wandkonstruktion nach einem der vorhergehenden Ansprüche, **dadurch gekennzeichnet, dass** das untere Ende des Trägerprofils (1) weniger als 1 m über dem Boden (14) angeordnet ist.

12. Wandkonstruktion nach einem der vorhergehenden Ansprüche, dadurch gekenntzeichnet, dass das Trägerprofil (1) eine Länge von mehr als 4 m, insbesondere mehr als 6 m, aufweist.
